# EUROPEAN PATENT SPECIFICATION

(11) **EP 1 124 834 B1**
(45) Date of publication and mention of the grant of the patent: **06.11.2002**
(21) Application number: 99951614.9
(22) Date of filing: 28.09.1999
(51) Int. Cl.: C07F 17/00

(54) **PREPARATION OF TITANIUM(II) OR ZIRCONIUM(II) COMPLEXES**
HERSTELLUNG VON TITAN(II)- ODER ZIRKON(II)KOMPLEXE
PREPARATION DE COMPLEXES DE TITANE (II) OU DE ZIRCONIUM(II)

(30) Priority: 29.10.1998 US 106162 P
(43) Date of publication of application: 22.08.2001
(73) Proprietor: THE DOW CHEMICAL COMPANY, Midland, Michigan 48674 (US)
(72) Inventor: ROSEN, Robert, K., Houston, TX 77005 (US)
(74) Representative: Burford, Anthony Frederick
(86) International application number: US9922359
(87) International publication number: WO00026221

(56) References cited:
- WO-A-96/00742
- US-A- 5 491 246
- US-A- 5 512 693
- CHEN, JIE ET AL: "Diene complexes of pentamethylcyclopentadienyltitanium chloride. Synthesis and first x-ray structure of titanium-diene complexes" CHEM. LETT. (1987), (8), 1545-8 ,1987, XP002127116

## Description

This invention relates to a process for preparing certain titanium and zirconium complexes comprising one or more cyclic, delocalized ligand groups wherein the metal of said complexes is in the +2 formal oxidation state. In a preferred embodiment, this invention relates to such processes wherein the metal is bonded to the cyclic group or groups via the delocalized π-electrons thereof and also covalently bonded thereto via a divalent ligand group. Such complexes are referred to in the art as "constrained geometry" complexes.

In US-A-5,512,693, the preparation of the foregoing metal complexes by reaction of the corresponding complex in the +3 or +4 formal oxidation state with an n-alkyl Grignard reagent was disclosed. The technique therein disclosed gives improved yields of the desired product, however, due to limited solubility of the Grignard reagents, generally requires the use of an ether based solvent. Disadvantageously, such solvents need to be scrupulously removed from the resulting product in order not to adversely affect the activity of the resulting metal complex as a catalyst component. This introduces a need for a purification step in the preparation. To further commercial preparation of such complexes, it would be desirable to eliminate the need for such a subsequent purification step.

In US-A-5,491,246, the above metal complexes were prepared by reaction of the corresponding alkoxide complex in the +3 or +4 formal oxidation state with the diene in the presence of a reducing agent. Suitable reducing agents included metals and compounds, specifically sodium naphthalenide, potassium graphite, lithium alkyls, trihydrocarbyl aluminum compounds and Grignard reagents.

The preparation and characterization of certain biscyclopentadienyl zirconium and hafnium diene complexes are described in the following references: Yasuda, et al., Organometallics, 1, 388 (1982) (Yasuda I); Yasuda, et al., Acc. Chem. Res., 18, 120 (1985), (Yasuda II); Erker, et al., Adv. Organomet. Chem., 24, (1985); and US-A-5,198,401. The preparation of certain Ti, Zr, and Hf monocyclopentadienyl diene complexes lacking the present bridged ligand structure, was described in Yamamoto et al., Organometallics, 8, 105 (1989) (Yamamoto) and Blenkers, J, et al., Organometallics, 6,459(1987).

According to one embodiment of the present invention there is provided a process for preparing a metal complex corresponding to the formula: 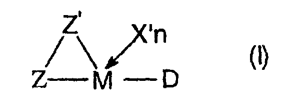 wherein,
M is titanium or zirconium in the + 2 formal oxidation state;
Z is an anionic group containing a cyclic group comprising delocalized, π-electrons through which the group is bound to M, said Z group also being bound to Z' through a covalent bond, a dative bond or a divalent bridging group, said Z group having up to 60 atoms other than hydrogen;
Z' is a second Z group or a moiety bound to M via a covalent or dative bond comprising boron, or a member of Group 14 of the Periodic Table of the Elements, and also comprising nitrogen, phosphorus, sulfur or oxygen, said Z' group having up to 60 atoms other than hydrogen;
D is a neutral, conjugated diene, optionally substituted with one or more hydrocarbyl groups, said D having up to 40 carbon atoms;
X' is a neutral Lewis base ligand selected from amines, phosphines and ethers said X' having from 3 to 20 non-hydrogen atoms; and
n is a number from 0 to 3;
said process comprising contacting a metal complex according to the formula: 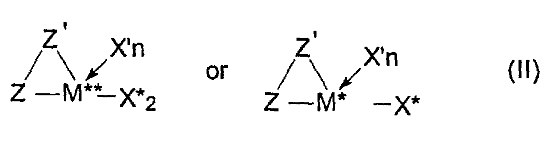 wherein,
M* is titanium or zirconium in the +3 formal oxidation state;
M** is titanium or zirconium in the +4 formal oxidation state;
X* is halide or C₁₋₂₀ hydrocarbyloxide; and
Z, Z', X' and n are as previously defined;
with a free diene corresponding to D, and subsequently or simultaneously contacting the resulting reaction mixture with a di(C₁₋₂₀ alkyll magnesium compound to form the desired metal complex.

The forgoing reduction and diene complex forming process is desirably conducted as one step of a multistep synthesis of the desired diene complexes. According to such a process a complex corresponding to the formula: 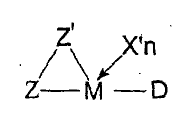 wherein,
M is titanium or zirconium in the + 2 formal oxidation state;
Z is an anionic group containing a cyclic group comprising delocalized, π-electrons through which the group is bound to M, said Z group also being bound to Z' through a covalent bond, a dative bond or a divalent bridging group, said Z group having up to 60 atoms other than hydrogen;
Z' is a second Z group or a moiety bound to M via a covalent or dative bond comprising boron, or a member of Group 14 of the Periodic Table of the Elements, and also comprising nitrogen, phosphorus, sulfur or oxygen, said Z' group having up to 60 atoms other than hydrogen;
D is a neutral, conjugated diene, optionally substituted with one or more hydrocarbyl groups, said 0 having up to 40 carbon atoms;
X' is a neutral Lewis base ligand selected from amines, phosphines and ethers said X' having from 3 to 20 non-hydrogen atoms; and
n is a number from 0 to 3;
can be prepared by a process comprising:
1) contacting a metal halide compound according to the formula M*(X*)₃X'ₙ or M**(X*)₄X'ₙ, wherein;
   M* is titanium or zirconium in the +3 formal oxidation state;
   M** is titanium or zirconium in the +4 formal oxidation state; and
   X* is halide or C₁₋₂₀ hydrocarbyloxide;
   with a dianionic salt corresponding to the formula: M'₂ZZ', wherein;
   M' is a Group 1 metal, MgCI or MgBr or two M' groups together are a Group 2 metal;
   to form an intermediate metal complex according to the formula: 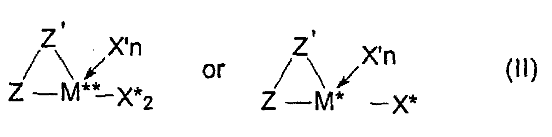 wherein,
   M* is titanium or zirconium in the +3 formal oxidation state;
   M** is titanium or zirconium in the +4 formal oxidation state;
   X* is halide or C₁₋₂₀ hydrocarbyloxide; and
   Z, Z', X' and n are as previously defined; and
2) contacting the intermediate metal complex with a free diene corresponding to D, and subsequently or simultaneously contacting the resulting reaction mixture with a di(C₁₋₂₀ alkyl) magnesium compound to form the desired metal complex.

All reference to the Periodic Table of the Elements herein shall refer to the Periodic Table of the Elements, published and copyrighted by CRC Press, Inc., 1989. Also, any reference to a Group or Groups shall be to the Group or Groups as reflected in this Periodic Table of the Elements using the IUPAC system for numbering groups.

The diene group, D, does not decompose under reaction conditions used to prepare the complexes of the invention. Under subsequent polymerization conditions, or in the formation of catalytic derivatives of the present complexes, the diene group, D, may undergo chemical reactions or be replaced by another ligand.

The present complexes contain a neutral diene ligand which is coordinated with the metal via delocalized π-electrons thereof, and not through covalent or sigma bonds thereby forming a metallocycle (σ-bound diene) where the metal is in the +4 formal oxidation state. Such a distinction is readily determined by X-ray crystallography or by NMR spectral characterization according to the techniques of Yasuda I, Yasuda II, and Erker, et al., Supra, as well as the references cited therein. By the term "π-complex" is meant both the donation and back acceptance of electron density by the ligand are accomplished using ligand π-orbitals, i. e., the diene is π-bound (π-bound diene).

Preferred transition metal complexes for use herein are dihalide, more preferably dichloride complexes, for example, complexes of the forgoing formula (II) wherein X* is halide, more preferably chloride. Preferred di(C₁₋₂₀) hydrocarbyl magnesium compounds are di(C₁₋₂₀) n-alkyl magnesium compounds. More preferably each n-alkyl group has from 1-6 carbon atoms, and most preferably each such group is selected from methyl, ethyl, n-propyl or n-butyl.

The reactions of this invention may be conducted at temperatures from -100°C to 300°C, preferably from 0 to 80°C. Suitable reaction media for the formation of the complexes are aliphatic and aromatic hydrocarbons and halohydrocarbons, ethers, and cyclic ethers. Examples include straight and branched-chain hydrocarbons such as isobutane, butane, pentane, hexane, heptane, octane, and mixtures thereof; cyclic and alicyclic hydrocarbons such as cyclohexane, cycloheptane, methylcyclohexane, methylcycloheptane, and mixtures thereof; aromatic and hydrocarbyl-substituted aromatic compounds such as benzene, toluene, xylene, and styrene, alkyl ethers having from 1 to 4 carbons in each alkyl group; C₁₋₄ dialkyl ether derivatives of (poly)alkylene glycols, and tetrahydrofuran Mixtures of the foregoing are also suitable. As previously mentioned however, the benefits of the process are most noticeable if an aliphatic hydrocarbon solvent is used for the entire process.

All of the steps of the reaction may be performed in sequence in a single reactor vessel without isolation of intermediate products, thereby greatly assisting in the large scale, commercial practice of the process. The recovery procedure usually involves separation of the resulting salt byproducts and residual reducing agent, if any, generally by a simple filtration and, optionally, devolatilization of the reaction medium.

The relative amounts of the respective reagents are not critical to the process. Specifically, the amount of dihydrocarbyl magnesium reagent used is desirably in a molar ratio from 0.25:1 to 3:1 compared to the amount of metal halide or hydrocarbyloxide to be converted, depending on the formal oxidation state of the intermediate metal halide. Preferably, equivalent amounts of reducing agent, based on Mg, are employed for the most economical operation. The amount of diene reagent used is desirably in a molar ratio from 1:1 to 30:1, preferably in a molar ratio from 1:1 to 10:1, compared to the amount of intermediate metal complex.

Preferred neutral Lewis bases include pyridine, diethylether, tetrahydrofuran (THF), 1,2-dimethoxyethane (DME), or tetramethylethylenediamine (TMEDA). Most preferably however, n is zero, that is, there are no neutral Lewis bases present during the preparation.

Preferred metal coordination complexes prepared according to the present invention correspond to the formula: 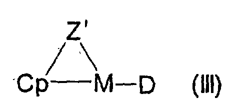 wherein M and D are as previously defined;
Z' is a moiety bound to M via a covalent bond comprising boron, or a member of Group 14 of the Periodic Table of the Elements, and also comprising nitrogen, phosphorus, sulfur or oxygen, said Z' group having up to 60 atoms other than hydrogen; and
Cp is a C₅H₄ group covalently bound to Z' or such a group substituted with from one to four substituents independently selected from hydrocarbyl, amino, silyl, germyl, halo, cyano, and combinations thereof, said substituent having up to 20 nonhydrogen atoms, and optionally, one or two pairs of such substituents, optionally together with Cp form one or more additional cyclic groups, thereby causing Cp to have a fused ring structure.

More preferred metal coordination complexes prepared according to the present invention correspond to the formula: 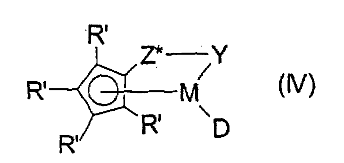 wherein:
R' each occurrence is independently selected from hydrogen, amino, hydrocarbyl, silyl. germyl, halo, cyano, and combinations thereof, said R' having up to 20 nonhydrogen atoms, and optionally, one or two pairs of such substituents together each form a C₂₋₁₀ hydrocarbylene group, thereby causing Cp to have a fused ring structure;
D is a neutral, conjugated diene group having up to 30 non-hydrogen atoms, which forms a π-complex with M;
Y is -O-, -S-, -NR*-, -PR*-;
M is titanium or zirconium in the +2 formal oxidation state;
Z* is SiR*₂, CR*₂, SiR*₂SiR*₂, CR*₂CR*₂, CR*=CR*, CR*₂SiR*₂, or GeR*₂; wherein:
   R* each occurrence is independently hydrogen, or a member selected from hydrocarbyl, silyl, or halohydrocarbyl, said R* having up to 10 non-hydrogen atoms.

Preferably, R' independently each occurrence is hydrogen, hydrocarbyl, silyl, amino, or halohydrocarbyl, said R' having up to 20 non-hydrogen atoms, or one or two pairs of adjacent R' substituents together each form a C₂₋₂₀ hydrocarbylene group, thereby causing the C₅R'₄ group to have a fused ring structure. Most preferably, R' is hydrogen, methyl, ethyl, propyl, butyl, pentyl, hexyl, (including where appropriate all isomers), cyclopentyl, cyclohexyl, norbornyl, benzyl, or phenyl or one or two pairs of adjacent R' substituents together cause the entire C₅R'₄ group to be an indenyl, tetrahydroindenyl, fluorenyl, tetrahydrofluorenyl, octahydrofluorenyl, s-indacenyl, or cyclopentaphen(l)anthrenyl group. Group 4 metal complexes containing the latter two ligand groups have been disclosed in pending United States patent application, 08/949505, filed October 14, 1997 (corresponding to WO-A-9827103; EP-A-0946575) and in provisional application 60/059000, filed September 15,1997 (corresponding to W0-A-9914221; EP-A-1017701). They are illustrated by the following structural formulas: 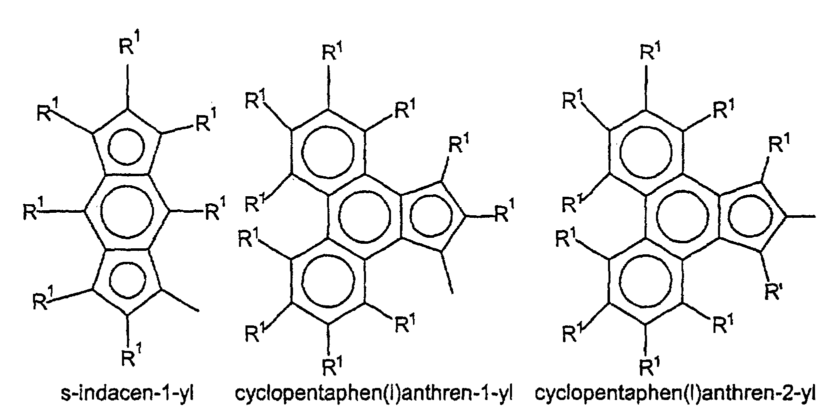 wherein R¹ independently each occurrence is hydrogen, amino, hydrocarbyl, silyl, halo, or halohydrocarbyl, said R¹ having up to 20 non-hydrogen atoms
Further preferably, at least one of R' or R* is an electron donating moiety. By the term "electron donating" is meant that the moiety is more electron donating than hydrogen. Thus, highly preferably Y is a nitrogen or phosphorus containing group corresponding to the formula -N(R")- or -P(R")-, wherein R" is C₁₋₁₀ hydrocarbyl.

Examples of suitable D groups include: 1,3-pentadiene; 2,4-hexadiene; 1,4-diphenyl-1,3-butadiene; 3-methyl-1,3-pentadiene; 1,4-dibenzyl-1,3-butadiene; 1,4 ditolyl-1,3-butadiene; 1,4-bis(trimethylsilyl)-1,3-butadiene, 1-(4-t-butylphenyl)-4-phenyl-1,3-butadiene, 1-(3-methylphenyl)-4-phenyl-1,3-butadiene, and 1-(3-methoxyphenyl)-4-phenyl-1,3-butadiene.

Most highly preferred metal coordination complexes prepared according to the present invention are amidosilane- or amidoalkanediyl- compounds corresponding to the formula: 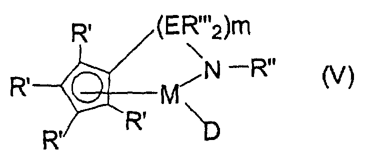 wherein:
M is titanium;
D is-1,3-pentadiene, 2,4-hexadiene, 1,4-diphenyl-1,3-butadiene, 3-methyl-1,3-pentadiene, 1,4-dibenzyl-1,3-butadiene, 1,4-ditolyl-1,3-butadiene, or 1,4-bis(trimethylsilyl)-1,3-butadiene;
R' is hydrogen, methyl, or phenyl, or one or two pairs at R' groups together cause the ring structure to be an indenyl, tetrahydroindenyl, fluorenyl, octahydrofluorenyl, s-indacenyl, or cyclopenta(l)phenanthrenyl group;
R" is C₁₋₁₀ hydrocarbyl;
R"' is independently each occurrence hydrogen or C₁₋₁₀ hydrocarbyl;
E is independently each occurrence silicon or carbon; and
m is 1 or 2.

Examples of the most highly preferred metal complexes prepared according to the present invention include compounds wherein R" is methyl, ethyl, propyl, butyl, pentyl, hexyl, (including all isomers of the foregoing where applicable), cyclododecyl, norbornyl, benzyl, or phenyl; (ER"'₂)ₘ is dimethylsilane, or ethanediyl; and the cyclic delocalized π-bonded group is a cyclopentadienyl, tetramethylcyclopentadienyl, indenyl, tetrahydroindenyl, fluorenyl, tetrahydrofluorenyl, 2-methyl-4-phenylindenyl, 2-methyl-4-naphthylindenyl, octahydrofluorenyl, s-indacenyl, or cyclopenta(l)phenanthrenyl group.

Highly preferred diene compounds are: 1,3-pentadiene; 2,4-hexadiene; 1,4-diphenyl-1,3-butadiene; 3-methyl-1,3-pentadiene; 1,4-dibenzyl-1,3-butadiene; 1,4-ditolyl-1,3-butadiene; 1,4-bis(trimethylsilyl)-1,3-butadiene, 1-(4-t-butylphenyl)-4-phenyl-1,3-butadiene, 1-(3-methylphenyl)-4-phenyl-1,3-butadiene, and 1-(3-methoxyphenyl)-4-phenyl-1,3-butadiene. All positional and geometric isomers of the foregoing diene reactants may be utilized.

The complexes are rendered catalytically active by combination with an activating cocatalyst or by use of an activating technique. Suitable activating cocatalysts for use herein include polymeric or oligomeric alumoxanes, especially methylalumoxane, triisobutyl aluminum modified methylalumoxane, or diisobutylalumoxane; strong Lewis acids, such as, C₁₋₃₀ hydrocarbyl substituted Group 13 compounds, especially tri(hydrocarbyl)aluminum- or tri(hydrocarbyl)boron compounds and halogenated derivatives thereof, having from 1 to 10 carbons in each hydrocarbyl or halogenated hydrocarbyl group, more especially perfluorinated tri(aryl)boron compounds, and most especially tris(pentafluorophenyl)borane; nonpolymeric, inert, compatible, noncoordinating, ion forming compounds (including the use of such compounds under oxidizing conditions); bulk electrolysis; and combinations of the foregoing activating cocatalysts and techniques. The foregoing activating cocatalysts and activating techniques have been previously taught with respect to different metal complexes in the following references: EP-A-277,003, US-A-5,153,157, US-A-5,064,802, US-A-5,321,106, US-A-5,721,185, US-A-5,350,723 and US-A-5,372,682.

The catalysts are suitably employed in the polymerization of olefins according to known Ziegler-Natta polymerization conditions. Especially suited are polymerization temperatures from 0-250°C and pressures from atmospheric to 1000 atmospheres (0.1 to 100MPa). Suspension, solution, slurry, gas phase or other process conditions may be employed if desired. A support, especially silica, modified silica (silica modified by calcining, treatment with a trialkylaluminum compound having from 1 to 10 carbons in each alkyl group, or treatment with an alkylalumoxane), alumina, or a polymer (especially polytetrafluoroethylene or a polyolefinl may be employed, and desirably is employed when the catalysts are used in a gas phase or slurry polymerization process. The support is preferably employed in an amount to provide a weight ratio of catalyst (based on metal):support from 1:100,000 to 1:10, more preferably from 1:50;000 to 1:20, and most preferably from 1:10,000 to 1:30.

In most polymerization reactions the molar ratio of catalyst:polymerizable compounds employed is from 10⁻¹²:1 to 10⁻¹:1, more preferably from 10⁻¹²:1 to 10⁻⁵:1.

Suitable solvents for solution polymerizations are noncoordinating, inert liquids. Examples include straight and branched-chain hydrocarbons such as isobutane, butane, pentane, hexane, heptane, octane, and mixtures thereof; cyclic and alicyclic hydrocarbons such as cyclohexane, cycloheptane, methylcyclohexane, methylcycloheptane, and mixtures thereof; perfluorinated hydrocarbons such as perfluorinated C₄₋₁₀ alkanes, and aromatic and alkyl-substituted aromatic compounds such as benzene, toluene, and xylene. Suitable solvents also include liquid olefins which may act as monomers or comonomers including ethylene, propylene, 1-butene, butadiene, cyclopentene, 1-hexene, 3-methyl-1-pentene, 4-methyl-1-pentene, 1,4-hexadiene, 1-octene, 1-decene, styrene, divinylbenzene, allylbenzene, vinyltoluene (including all isomers alone or in admixture), 4-vinylcyclohexene, and vinylcyclohexane. Mixtures of the foregoing are also suitable.

Having described the invention the following examples are provided as further illustration thereof and are not to be construed as limiting. The skilled artisan will appreciate that the invention disclosed herein may be practiced in the absence of any component which has not been specifically disclosed. Unless stated to the contrary all parts and percentages are expressed on a weight basis. The term "overnight", if used, refers to a time of approximately 16-18 hours, "room temperature", if used, refers to a temperature of about 20-25 °C, and "mixed alkanes" refers to a mixture of hydrogenated propylene oligomers, mostly C₆-C₁₂ isoalkanes, available commercially under the trademark Isopar E™ from Exxon Chemicals Inc.

All solvents were purified using the technique disclosed by Pangborn et al, Organometallics, 15, 1518-1520, (1996). All compounds, solutions, and reactions were handled under an inert atmosphere (dry box). ¹H and ¹³C NMR shifts were referenced to internal solvent resonances and are reported relative to TMS.

### Example 1 Preparation of (t-butylamido)(cyclopenta(/)phenanthren-2-yl)dimethylsilane-titanium (II) 1,4-diphenyl-1,3-butadiene

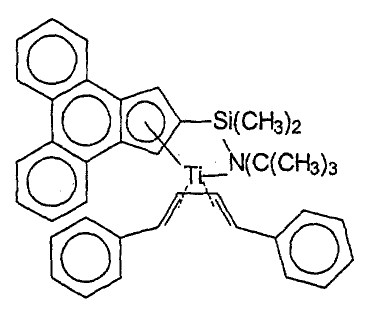

### Preparation of lithium 1H-cyclopenta[/]phenanthrene-2-yl

To a 250 ml round bottom flask containing 1.42g (0.00657 mole) of 1H-cyclopenta[/]phenanthrene and 120 ml of benzene was added dropwise, 4.2 ml of a 1.60 M solution of n-BuLi in mixed hexanes. The solution was allowed to stir overnight. The lithium salt was isolated by filtration, washing twice with 25 ml benzene and drying under vacuum. Isolated yield was 1.426 g (97.7 percent). ¹H NMR analysis indicated the predominant isomer was substituted at the 2 position.

### Preparation of (1H-cyclopenta[/]phenanthrene-2-yl)dimethylchlorosilane

To a 500 ml round bottom flask containing 4.16 g (0.0322 mole) of dimethyldichlorosilane (Me₂SiCl₂) and 250 ml of tetrahydrofuran (THF) was added dropwise a solution of 1.45 g (0.0064 mole) of lithium 1H-cyclopenta[/]phenanthrene-2-yl in THF. The solution was stirred for approximately 16 hours, after which the solvent was removed under reduced pressure, leaving an oily solid which was extracted with toluene, filtered through diatomaceous earth filter aid, washed twice with toluene and dried under reduced pressure. Isolated yield was 1.98 g (99.5 percent).

### Preparation of (1H-cyclopenta[/]phenanthrene-2-yl)dimethyl(t-butylamino)silane

To a 500 ml round bottom flask containing 1.98 g (0.0064 mole) of (1H-cyclopenta[/]phenanthrene-2-yl)dimethylchlorosilane and 250 ml of hexane was added 2.00 ml (0.0160 mole) of t-butylamine. The reaction mixture was allowed to stir for several days, then filtered using diatomaceous earth filter aid, washed twice with hexane. The product was isolated by removing residual solvent under reduced pressure. The isolated yield was 1.98 g (88.9 percent).

### Preparation of dilithio (1H-cyclopenta[/]phenanthrene-2-yl)dimethyl(t-butylamido)silane

To a 250 ml round bottom flask containing 1.03 g 10.0030 mole) of (1H-cyclopenta[/]phenanthrene-2-yl)dimethyl(t-butylamino)silane) and 120 ml of benzene was added dropwise 3.90 ml of a solution of 1.6 M n-Buli in mixed hexanes. The reaction mixture was stirred for approximately 16 hours. The product was isolated by filtration, washed twice with benzene and dried under reduced pressure. Isolated yield was 1.08 g (100 percent).

### Preparation of (1H-cyclopenta[/]phenanthrene-2-yl)dimethyl(t-butylamido)silanetitanium dichloride

To a 250 ml round bottom flask containing 1.17 g (0.0030 mole) of TiCl₃•3THF and about 120 ml of THF was added at a fast drip rate about 50 ml of a THF solution of 1.08 g of dilithio (1H-cyclopenta[/]phenanthrene-2yl)dimethyl(t-butylamido)silane. The mixture was stirred at about 20 °C for 1.5 h at which time 0.55 gm (0.002 mole) of solid PbCl₂ was added. After stirring for an additional 1.5 h the THF was removed under vacuum and the reside was extracted with toluene, filtered and dried under reduced pressure to give an orange solid. Yield was 1.31 g (93.5 percent).

### Preparation of (1H-cyclopenta[/]phenanthrene-2-yl)dimethyl(t-butylamido)silanetitanium dichloride

In an inert atmosphere glove box, 5.00 g (10.8 mmol) of (t-butylamido)(cyclopenta[/]phenanthren-2-yl)dimethylsilanetitanium dichloride and 223 g (10.8 mmol) of 1,4-diphenyt-1,3-butadiene were slurried in 100 mL of toluene. While stirring,12.15 mL of a 0.98 M toluene solution of (ethyl)(n-butyt)Mg in toluene (12 mmol) was added and the mixture was heated to the reflux temperature and maintained at that temperature for 3 h. The mixture's color changed to a dark red-purple color. The reaction mixture was cooled to room temperature (20°C) and the volatile materials removed under reduced pressure. The reaction mixture was filtered through a 10-15 µm fritted funnel using diatomaceous earth filter aid giving the desired product as a 2.1 weight percent solution. Yield was 77 percent.

### Example 2 (t-butylamido)dimethyl(tetramethylcyclopentadienyl)silanetitanium(II) 1,4-diphenyl-1,3-butadiene

(t-Butylamido)dimethyl(tetramethylcyclopentadienyl)silanetitanium dichloride, (1.00 g, 2.4 mmol) was dissolved in 20 mL of toluene. Trans,trans-1,4-diphenyl-1,3-butadiene (0.56 g, 2.7 mmol) was added using an additional 10 mL of toluene. While stirring, butylethylmagnesium (Akzo Nobel, 2.2 mL of a 1.36 M solution) was added, resulting in an immediate darkening of the solution color. The mixture was stirred for four days at ambient temperature. At the end of this time, the mixture was filtered using a 0.45 µm syringe filter (25 mm diameter) and a glass fiber pre-filter. The toluene was removed under reduced pressure, and the solid was triturated (2 x 10 mL) with pentane. A purple solid was obtained; yield 1.12 g (82 percent).

### Example 3 Preparation of (t-butylamido)dimethyl(4-pyrrolidinoinden-1-yl)silanetitanium (II) 1,3-pentadiene

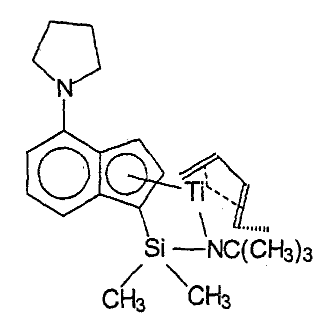

(t-Butylamido)dimethyl(4-pyrrolidinoinden-1-yl)silanetitanium dichloride (307 g, 0.715 mol), hexane (3.0L), piperylene (182 g), and 1.07 mol of 1,3-pentadiene, (additionally containing 110 g of inert, hydrocarbon components), were added to a 5 L glass reactor with resin kettle lid equipped with a stirrer assembly (a glass stirrer shaft with Teflon™ paddle and stirrer seal), and a pair of ground glass stoppers. A solution of butylethylmagnesium in heptane (564 g, 0.715 mol BuEtMg) was loaded into a side arm vented addition funnel, stoppered with a ground glass stopper, and attached to the reactor through a port opened by removal of one of the ground glass stoppers. The BuEtMg solution was added dropwise over 1 hour, at room temperature, while the dichloride solution was stirred and cooled with a fan. A precipitate was noticed after 100 grams of BuEtMg had been added. The additional funnel was replaced with a condenser, then the slurry was heated at reflux for 4 hours, followed by cooling (90 minutes) to 25 °C. The slurry was then vacuum filtered through a bed of diatomaceous earth filter aid packed on a fine fritted glass funnel. During the filtration a tacky, black, tar-like product which collected on the filter was removed with a spatula and shaken with hexane (400 mL.) to extract additional product. This slurry was also filtered using diatomaceous earth filter aid and the combined filtrates were added to a clean, predried, 5 L glass reactor with resin kettle type lid equipped with a Schlenk adaptor, stirrer assembly (a glass stirrer shaft with Teflon™ paddle and stirrer seal), and ground glass stopper. The solvent was removed under dynamic vacuum, the stirrer was fumed off, and the reactor contents were maintained under vacuum (1 Torr (135 Pa/16 hours) to remove the last traces of hexane. The product (276 g, 0.645 mol) was recovered in 90 percent isolated yield as a tacky, brown solid.

### Example 4 Preparation of (t-butylamido)dimethyl(2-methyl-s-indacen-1-yl)silanetitanium (II) (1,3-pentadiene)

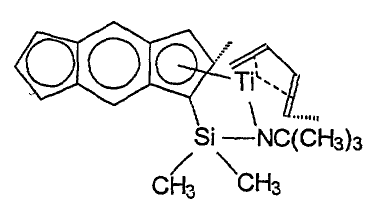

(t-Butylamido)dimethyl(tetramethylcyclopentadienyl)silanetitanium (0.50 g, 1.2 mmol) was slurried in 30 mL of cyclohexane in a 100 mL flask, Piperylene (0.359 mL, 3.6 mmol) and BEM (1.423 mL, 1.32 mmol) were added. The reaction was heated to reflux for 90 minutes. After cooling, the reaction was filtered through diatomaceous earth filter aid on a medium porosity glass fritted funnel. The solvent was removed under reduced pressure to afford the desired product 0.418 g (84 percent) as a dark solid.

## Claims

1. A process for preparing a metal complex corresponding to the formula: 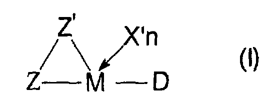 wherein,
M is titanium or zirconium in the +2 formal oxidation state;
Z is an anionic group containing a cyclic group comprising delocalized, π-electrons through which the group is bound to M, said Z group also being bound to Z' through a covalent bond, a dative bond or a divalent bridging group, said Z group having up to 60 atoms other than hydrogen;
Z' is a second Z group or a moiety bound to M via a covalent or dative bond comprising boron, or a member of Group 14 of the Periodic Table of the Elements, and also comprising nitrogen, phosphorus, sulfur or oxygen, said Z' group having up to 60 atoms other than hydrogen;
D is a neutral, conjugated diene, optionally substituted with one or more hydrocarbyl groups, said D having up to 40 carbon atoms;
X' is a neutral Lewis base ligand selected from amines, phosphines and ethers said X' having from 3 to 20 non-hydrogen atoms; and
n is a number from 0 to 3;
said process comprising contacting a metal complex according to the formula: 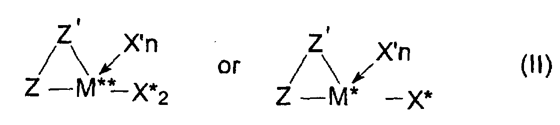 wherein,
M* is titanium or zirconium in the +3 formal oxidation state;
M** is titanium or zirconium in the +4 formal oxidation state;
X* is halide or C₁₋₂₀ hydrocarbyloxide; and
Z, Z', X' and n are as previously defined;
with a free diene corresponding to D, and subsequently or simultaneously contacting the resulting reaction mixture with a di(C₁₋₂₀ alkyl) magnesium compound to form the desired metal complex.

2. A process according to Claim 1, wherein said metal complex of Formula II is prepared by:
1) contacting a metal halide compound according to the formula M*(X*)₃X'ₙ or M**(X*)₄X'ₙ, wherein;
M*, M** and X* are as defined in Claim 1;
with a dianionic salt corresponding to the formula: M'₂ZZ', wherein;
M' is a Group 1 metal, MgCl or MgBr or two M' groups together are a Group 2 metal.

3. A process according to Claim 1 or Claim 2, wherein n is zero.

4. A process according to Claim 3, wherein:
Z' is a moiety bound to M via a covalent bond comprising boron, or a member of Group 14 of the Periodic Table of the Elements, and also comprising nitrogen, phosphorus, sulfur or oxygen, said Z' group having up to 60 atoms other than hydrogen; and
Z is a C₅H₄ group covalently bound to Z' or such a group substituted with from one to four substituents independently selected from hydrocarbyl, amino, silyl, germyl, halo, cyano, and combinations thereof, said substituent having up to 20 nonhydrogen atoms, and optionally, one or two pairs of such substituents, optionally together with the C₅H₄ group form one or more additional cyclic groups, thereby causing Z to have a fused ring structure.

5. A process according to Claim 4, wherein the resulting metal complex corresponds to the formula: 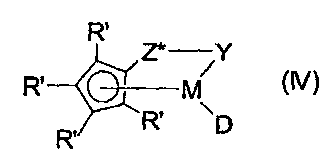 wherein:
R' each occurrence is independently selected from hydrogen, amino, hydrocarbyl, silyl, germyl, halo, cyano, and combinations thereof, said R' having up to 20 nonhydrogen atoms, and optionally, one or two pairs of such substituents together each form a C₂₋₁₀ hydrocarbylene group, thereby causing the C₅R'₄ group to have a fused ring structure;
D is a neutral, conjugated diene group having up to 30 non-hydrogen atoms, which forms a π-complex with M;
Y is -O-,-S-,-NR*-,-PR*-;
M is titanium or zirconium in the +2 formal oxidation state;
Z* is SiR*₂, CR*₂, SiR*₂SiR*₂, CR*₂CR*₂, CR*=CR*, CR*₂SiR*₂, or GeR*₂; wherein:
R* each occurrence is independently hydrogen, or a member selected from hydrocarbyl, silyl, or halohydrocarbyl, said R* having up to 10 non-hydrogen atoms.

6. A process according to Claim 5, wherein R' independently each occurrence is hydrogen, hydrocarbyl, silyl, amino, or halohydrocarbyl, said R' having up to 20 non-hydrogen atoms, or one or two pairs of adjacent R' substituents together each form a C₂₋₂₀ hydrocarbylene group, thereby causing Cp to have a fused ring structure.

7. A process according to Claim 6, wherein R' is hydrogen, methyl, ethyl, propyl, butyl, pentyl, hexyl, (including where appropriate all isomers), cyclopentyl, cyclohexyl, norbornyl, benzyl, or phenyl or one or two pairs of adjacent R' substituents together cause the entire C₅R'₄ group to be an indenyl, tetrahydroindenyl, fluorenyl, tetrahydrofluorenyl, octahydrofluorenyl, s-indacenyl, or cyclopentaphen(l)anthrenyl group.

8. A process according to Claim 7, wherein Y is a nitrogen or phosphorus containing group corresponding to the formula -N(R")- or -P(R")-, wherein R" is C₁₋₁₀ hydrocarbyl.

9. A process according to Claim 8, wherein the resulting metal complex corresponds to the formula: 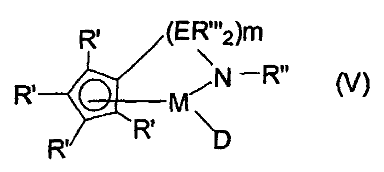 wherein:
M is titanium;
D is -1,3-pentadiene, 2,4-hexadiene, 1,4-diphanyl-1,3-butadiene, 3-methyl-1,3-pentadiene, 1,4-dibenzyl-1,3-butadiene, 1,4-ditolyl-1,3-butadiene, or 1,4-bis(trimethylsilyl)-1,3-butadiene;
R' is hydrogen, methyl, or phenyl, or one or two pairs of R' groups together cause the ring structure to be an indenyl, tetrahydroindenyl, fluorenyl, octahydrofluorenyl, s-indacenyl, or cyclopenta(l)phenanthrenyl group;
R" is C₁₋₁₀ hydrocarbyl;
R"' is independently each occurrence hydrogen or C₁₋₁₀ hydrocarbyl;
E is independently each occurrence silicon or carbon; and
m is 1 or 2.

10. A process according to any one of the preceding claims, wherein the free diene corresponding to D is 1,4-dlphenyl-1,3-butadiene; 1,3-pentadiene; 1,4-dibenzyl-1,3-butadiene; 2,4-hexadiene; 3-methyl-1,3-pentadiene; or 1,4-ditolyl-1,3-butadiene.

11. A process according to any one of the preceding claims, wherein X* is halide.

12. A process according to any one of the preceding claims, wherein an aliphatic hydrocarbon solvent is used for the entire process.

13. A process according to any one of the preceding claims, wherein all of the steps of the reaction are performed in sequence in a single reactor vessel without isolation of intermediate products.

14. A process according to any one of the preceding claims, wherein each hydrocarbyl group of the di(C₁₋₂₀ hydrocarbyl) magnesium compound is n-alkyl.

## Patentansprüche

1. Verfahren zur Herstellung eines Metallkomplexes entsprechend der Formel: 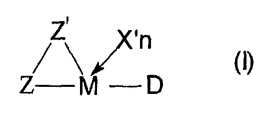 worin:
M Titan oder Zirconium in der formalen Oxidationsstufe +2 ist;
Z eine anionische Gruppe ist, die eine cyclische Gruppe mit delokalisierten π-Elektronen, über welche die Gruppe an M gebunden ist, enthält, wobei diese Z-Gruppe auch an Z' über eine kovalente Bindung, eine dative Bindung oder eine divalente verbrückende Gruppe gebunden ist und diese Z-Gruppe bis zu 60 Atome aufweist, die nicht Wasserstoff sind;
Z' eine zweite Z-Gruppe oder eine Einheit ist, die über eine kovalente oder dative Bindung an M gebunden ist und Bor oder ein Mitglied der Gruppe 14 des Periodensystems der Elemente enthält und weiterhin Stickstoff, Phosphor, Schwefel oder Sauerstoff enthält, wobei diese Z'-Gruppe bis zu 60 Atome aufweist, die nicht Wasserstoff sind;
D ein neutrales konjugiertes Dien ist, das fakultativ mit einer oder mehreren Hydrocarbylgruppen substituiert ist, wobei dieses D bis zu 40 Kohlenstoffatome aufweist;
X' ein neutraler Lewis-Base-Ligand ist, ausgewählt aus Aminen, Phosphinen und Ethern, wobei dieses X' 3 bis 20 Nichtwasserstoffatome aufweist, und
n eine Zahl von 0 bis 3 ist,
wobei dieses Verfahren Inberührungbringen eines Metallkomplexes entsprechend der Formel: 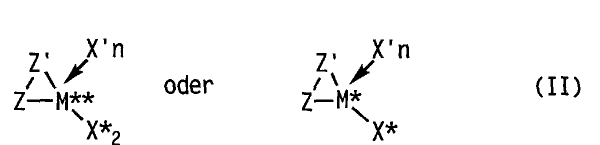 worin:
M* Titan oder Zirconium in der formalen Oxidationsstufe +3 ist;
M** Titan oder Zirconium in der formalen Oxidationsstufe +4 ist;
X* Halogenid oder C₁₋₂₀-Hydrocarbyloxid ist und
Z, Z', X' und n wie zuvor definiert sind;
mit einem freien Dien entsprechend D und nachfolgend oder gleichzeitig Inberührungbringen der resultierenden Reaktionsmischung mit einer Di(C₁₋₂₀-alkyl)magnesiumverbindung, um den gewünschten Metallkomplex zu bilden,
umfasst.

2. Verfahren nach Anspruch 1, worin dieser Metallkomplex der Formel II hergestellt wird durch:
1) Inberührungbringen einer Metallhalogenidverbindung gemäss der Formel M*(X*)₃X'ₙ oder M**(X*)₄X'ₙ, worin
M*, M** und X* wie in Anspruch 1 definiert sind,
mit einem dianionischen Salz entsprechend der Formel M'₂ZZ', worin M' ein Gruppe-1-Metall, MgCl oder MgBr ist oder zwei M'-Gruppen zusammen ein Gruppe-2-Metall sind.

3. Verfahren nach Anspruch 1 oder Anspruch 2, worin n gleich null ist.

4. Verfahren nach Anspruch 3, worin:
Z' eine Einheit ist, die an M über eine kovalente Bindung gebunden ist und Bor oder ein Mitglied der Gruppe 14 des Periodensystems der Elemente enthält und weiterhin Stickstoff, Phosphor, Schwefel oder Sauerstoff enthält, wobei diese Z'-Gruppe bis zu 60 Atome aufweist, die nicht Wasserstoff sind; und
Z eine C₅H₄-Gruppe ist, die kovalent an Z' gebunden ist, oder solch eine Gruppe, die mit ein bis vier Substituenten substituiert ist, die unabhängig voneinander ausgewählt sind aus Hydrocarbyl, Amino, Silyl, Germyl, Halogen, Cyano und Kombinationen derselben,
wobei dieser Substituent bis zu 20 Nichtwasserstoffatome aufweist, und fakultativ ein oder zwei Paar solcher Substituenten, fakultativ zusammen mit der C₅H₄-Gruppe eine oder mehrere weitere cyclische Gruppen ausbilden und dabei bewirken, dass Z eine anellierte Ringstruktur aufweist.

5. Verfahren nach Anspruch 4, worin der resultierende Metallkomplex der Formel entspricht: 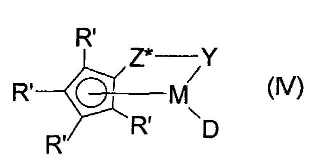 worin:
R' bei jedem Auftreten unabhängig voneinander ausgewählt ist aus Wasserstoff, Amino, Hydrocarbyl, Silyl, Germyl, Halogen, Cyano und Kombinationen derselben, wobei R' bis zu 20 Nichtwasserstoffatome aufweist und fakultativ ein oder zwei Paare solcher Substituenten zusammen jeweils eine C₂₋₁₀-Hydrocarbylengruppe ausbilden und dabei bewirken, dass die C₅R'₄-Gruppe eine anellierte Ringstruktur aufweist;
D eine neutrale konjugierte Diengruppe mit bis zu 30 Nichtwasserstoffatomen ist, die einen π-Komplex mit M ausbildet;
Y gleich -O-, -S-, -NR*-, -PR*- ist;
M Titan oder Zirconium in der formalen Oxidationsstufe +2 ist;
Z* gleich SiR*₂, CR*₂, SiR*₂SiR*₂, CR*₂CR*₂, CR*=CR*, CR*₂SiR*₂ oder GeR*₂ ist, worin:
R* unabhängig voneinander bei jedem Auftreten Wasserstoff oder ein Mitglied, ausgewählt aus Hydrocarbyl, Silyl oder Halogenhydrocarbyl ist, wobei R* bis zu 10 Nichtwasserstoffatome aufweist.

6. Verfahren nach Anspruch 5, worin R' unabhängig voneinander bei jedem Auftreten Wasserstoff, Hydrocarbyl, Silyl, Amino oder Halogenhydrocarbyl ist, wobei R' bis zu 20 Nichtwasserstoffatome aufweist oder ein oder zwei Paare benachbarter R'-Substituenten zusammen jeweils eine C₂₋₂₀-Hydrocarbylengruppe bilden und dabei bewirken, dass Cp eine anellierte Ringstruktur aufweist.

7. Verfahren nach Anspruch 6, worin R' Wasserstoff, Methyl, Ethyl, Propyl, Butyl, Pentyl, Hexyl (einschließlich aller Isomere, wo angebracht), Cyclopentyl, Cyclohexyl, Norbornyl, Benzyl oder Phenyl ist oder ein oder zwei Paare benachbarter R'-Substituenten zusammen bewirken, dass die gesamte C₅R'₄-Gruppe eine Indenyl-, Tetrahydroindenyl-, Fluorenyl-, Tetrahydrofluorenyl-, Octahydrofluorenyl-, s-Indacenyl- oder Cyclopentaphen(1)anthrenylgruppe ist.

8. Verfahren nach Anspruch 7, worin Y eine stickstoff- oder phosphorhaltige Gruppe entsprechend der Formel -N(R")- oder -P(R")- ist, worin R" C₁₋₁₀-Hydrocarbyl ist.

9. Verfahren nach Anspruch 8, worin der resultierende Metallkomplex der Formel entspricht: 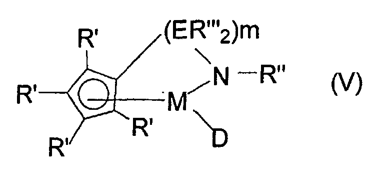 worin:
M gleich Titan ist;
D 1,3-Pentadien, 2,4-Hexadien, 1,4-Diphenyl-1,3-butadien, 3-Methyl-1,3-pentadien, 1,4-Dibenzyl-1,3-butadien, 1,4-Ditolyl-1,3-butadien oder 1,4-Bis(trimethylsilyl)-1,3-butadien ist;
R' Wasserstoff, Methyl oder Phenyl ist oder ein oder zwei Paare von R'-Gruppen zusammen bewirken, dass die Ringstruktur eine Indenyl-, Tetrahydroindenyl-, Fluorenyl-, Octahydrofluorenyl, s-Indacenyl- oder Cyclopenta(l)phenanthrenylgruppe ist;
R" C₁₋₁₀-Hydrocarbyl ist;
R''' unabhängig voneinander bei jedem Auftreten Wasserstoff oder C₁₋₁₀-Hydrocarbyl ist;
E unabhängig voneinander bei jedem Auftreten Silicium oder Kohlenstoff ist und
m gleich 1 oder 2 ist.

10. Verfahren nach einem der vorstehenden Ansprüche, worin das freie Dien, das D entspricht, 1,4-Diphenyl-1,3-butadien, 1,3-Pentadien, 1,4-Dibenzyl-1,3-butadien, 2,4-Hexadien, 3-Methyl-1,3-pentadien oder 1,4-Ditolyl-1,3-butadien ist.

11. Verfahren nach einem der vorstehenden Ansprüche, worin X* Halogenid ist.

12. Verfahren nach einem der vorstehenden Ansprüche, worin ein aliphatisches Kohlenwasserstofflösungsmittel für das gesamte Verfahren verwendet wird.

13. Verfahren nach einem der vorstehenden Ansprüche, worin die gesamten Schritte der Reaktion nacheinander in einem einzigen Reaktionsgefäß ohne Isolierung der Zwischenprodukte durchgeführt werden.

14. Verfahren nach einem der vorstehenden Ansprüche, worin jede Hydrocarbylgruppe der Di(C₁₋₂₀- hydrocarbyl)magnesiumverbindung n-Alkyl ist.

## Revendications

1. Procédé de préparation d'un complexe métallique correspondant à la formule : 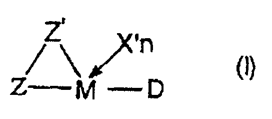 dans laquelle
M est titane ou zirconium au degré d'oxydation formel +2 ;
Z est un groupe anionique contenant un groupe cyclique comprenant des électrons π délocalisés par l'intermédiaire desquels le groupe est lié à M, ledit groupe Z étant également lié à Z' par une liaison covalente, une liaison dative, ou un groupe de pontage divalent, ledit groupe Z comportant jusqu'à 60 atomes autres que l'hydrogène ;
Z' est un second groupe Z ou un fragment lié à M par une liaison covalente ou dative comprenant du bore ou un élément du Groupe 14 du Tableau Périodique des Eléments, et comprenant également de l'azote, du phosphore, du soufre ou de l'oxygène, ledit groupe Z' comportant jusqu'à 60 atomes autres que l'hydrogène ;
D est un diène conjugué neutre, éventuellement substitué par un ou plusieurs groupes hydrocarbyle, ledit D comportant jusqu'à 40 atomes de carbone ;
X' est un coordinat base de Lewis neutre choisi parmi les amines, les phosphines et les éthers, ledit X' comportant de 3 à 20 atomes non hydrogène ; et
n est un nombre de 0 à 3 ;
ledit procédé comprenant la mise en contact d'un complexe métallique de formule : 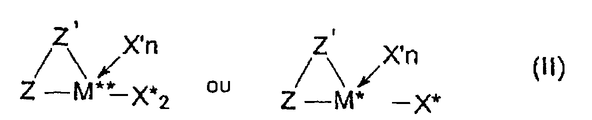 dans lesquelles
M* est titane ou zirconium au degré d'oxydation formel +3 ;
M** est titane ou zirconium au degré d'oxydation formel +4 ;
X* est halogénure ou hydrocarbyloxyde en C₁₋₂₀ ; et
Z, Z', X' et n sont tels que précédemment définis ;
avec un diène libre correspondant à D, et mise en contact postérieurement ou simultanément du mélange réactionnel résultant avec un composé di(alkyl en C₁₋₂₀) magnésium pour former le complexe métallique souhaité.

2. Procédé selon la revendication 1, dans lequel ledit complexe métallique de formule II est préparé par :
1) mise en contact d'un composé halogénure métallique de formule M*(X*)₃X'ₙ ou M**(X*)₄X'ₙ,
où :
M*, M** et X* sont tels que définis dans la revendication 1 ;
avec un sel dianionique correspondant à la formule M'₂ZZ', dans laquelle :
M' est un métal du Groupe 1, MgCl ou MgBr, ou deux groupes M' ensemble constituent un métal du Groupe 2.

3. Procédé selon l'une des revendications 1 ou 2, dans lequel n est zéro.

4. Procédé selon la revendication 3, dans lequel :
Z' est un fragment lié à M par une liaison covalente comprenant du bore, ou un élément du Groupe 14 du Tableau Périodique des Eléments, et comprenant aussi de l'azote, du phosphore, du soufre ou de l'oxygène, ledit groupe Z' comportant jusqu'à 60 atomes autres que l'hydrogène ; et
Z est un groupe C₅H₄ lié par covalence à Z' ou un groupe de ce type substitué avec de un à quatre substituants choisis indépendamment parmi hydrocarbyle, amino, sylile, germyle, halo, cyano et des combinaisons de ces derniers, ledit substituant comportant jusqu'à 20 atomes non hydrogène, et éventuellement, une ou deux paires de ces substituants, éventuellement conjointement avec le groupe C₅H₄, forment un ou plusieurs groupes cycliques supplémentaires, conférant ainsi à Z une structure cyclique condensée.

5. Procédé selon la revendication 4, dans lequel le complexe métallique résultant correspond à la formule : 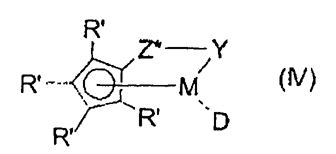 dans laquelle :
chaque R' est indépendamment choisi parmi hydrogène, amino, hydrocarbyle, silyle, germyle, halo, cyano, et des combinaisons de ces derniers, ledit R' comportant jusqu'à 20 atomes non hydrogène, et éventuellement, une ou deux paires de ces substituants ensemble forment chacune un groupe hydrocarbylène en C₂₋₁₀, conférant ainsi au groupe C₅R'₄ une structure cyclique condensée ;
D est un groupe diène conjugué neutre comportant jusqu'à 30 atomes non hydrogène, qui forme un complexe π avec M ;
Y est -O-, -S-, -NR*-, -PR*- ;
M est titane ou zirconium au degré d'oxydation formel +2 ;
Z est SiR*₂, CR*₂, SiR*₂SiR*_{2,} CR*₂CR*₂, CR*=CR*, CR*₂ SiR*₂ ou GeR*₂ ; où
chaque R* est, indépendamment, hydrogène, ou un membre choisi parmi hydrocarbyle, silyle ou halohydrocarbyle, ledit R* comportant jusqu'à 10 atomes non hydrogène.

6. Procédé selon la revendication 5, dans lequel chaque R' est, indépendamment, hydrogène, hydrocarbyle, silyle, amino ou halohydrocarbyle, ledit R' comportant jusqu'à 20 atomes non hydrogène, ou une ou deux paires de substituants R' adjacents ensemble forment chacune un groupe hydrocarbylène en C₂₋₂₀, conférant ainsi à Cp une structure cyclique condensée.

7. Procédé selon la revendication 6, dans lequel R' est hydrogène, méthyle, éthyle, propyle, butyle, pentyle, hexyle (y compris, lorsque cela est approprié, tous les isomères), cyclopentyle, cyclohexyle, norbornyle, benzyle ou phényle, ou une ou deux paires de substituants R' adjacents ensemble font que le groupe C₅R'₄ entier est un groupe indényle, tétrahydroindényle, fluorényle, tétrahydrofluorényle, octahydrofluorényle, s-indacényle, ou cyclopentaphen (I) anthrényle.

8. Procédé selon la revendication 7, dans lequel Y est un groupe contenant de l'azote ou du phosphore correspondant aux formules -N(R")- ou -P(R")-, dans lesquelles R" est hydrocarbyle en C₁₋₁₀.

9. Procédé selon la revendication 8, dans lequel le complexe métallique résultant correspond à la formule : 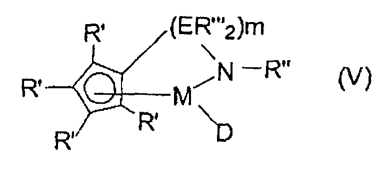 dans laquelle :
M est titane ;
D est 1,3-pentadiène, 2,4-hexadiène, 1,4-diphényl-1,3-butadiène, 3-méthyl-1,3-pentadiène, 1,4-dibenzyl-1,3-butadiène, 1,4-ditolyl-1,3-butadiène ou 1,4-bis(triméthylsilyl)-1,3-butadiène
R' est hydrogène, méthyle ou phényle, ou une ou deux paires de groupes R' ensemble font que la structure cyclique est un groupe indényle, tétrahydroindényle, fluorényle, octahydrofluorényle, s-indacényle, ou cyclopenta(I)phénanthrényle ;
R" est hydrocarbyle en C₁₋₁₀ ;
chaque R''' est, indépendamment, hydrogène ou hydrocarbyle en C₁₋₁₀ ;
chaque E est, indépendamment, silicium ou carbone ; et
m est 1 ou 2.

10. Procédé selon l'une quelconque des revendications précédentes, dans lequel le diène libre correspondant à D est 1,4-diphényl-1,3-butadiène ; 1,3-pentadiène ; 1,4-dibenzyl-1,3-butadiène ; 2,4-hexadiène ; 3-méthyl-1,3-pentadiène; ou 1,4-ditolyl-1,3-butadiène.

11. Procédé selon l'une quelconque des revendications précédentes, dans lequel X* est halogénure.

12. Procédé selon l'une quelconque des revendications précédentes, dans lequel un solvant hydrocarbure aliphatique est utilisé pour le procédé entier.

13. Procédé selon l'une quelconque des revendications précédentes, dans lequel toutes les étapes de la réaction sont effectuées en séquence dans une cuve de réacteur unique sans isoler les produits intermédiaires.

14. Procédé selon l'une quelconque des revendications précédentes, dans lequel chaque groupe hydrocarbyle du composé di(hydrocarbyle en C₁₋₂₀) magnésium est n-alkyle.
